(19) Europäisches Patentamt
European Patent Office
Office européen des brevets

(11) **EP 4 303 849 A1**

(12) **EUROPÄISCHE PATENTANMELDUNG**

(43) Veröffentlichungstag:
**10.01.2024  Patentblatt 2024/02**

(21) Anmeldenummer: **22183474.0**

(22) Anmeldetag: **07.07.2022**

(51) Internationale Patentklassifikation (IPC):
**G08G 1/04** (2006.01)     **G06V 10/62** (2022.01)
**G06V 20/54** (2022.01)    **G08G 1/054** (2006.01)
**G08G 1/052** (2006.01)    **G06V 20/62** (2022.01)
**G06T 7/246** (2017.01)

(52) Gemeinsame Patentklassifikation (CPC):
**G08G 1/04; G06T 7/246; G06V 20/54; G08G 1/052; G08G 1/054**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Roadia GmbH**
**13465 Berlin (DE)**

(72) Erfinder:
  • **Filipenko, Mykhaylo**
    **13465 Berlin (DE)**

  • **Fischer, Tobias**
    **13465 Berlin (DE)**
  • **Hantschmann, Markus**
    **13465 Berlin (DE)**
  • **Zhang, Shiyue**
    **13465 Berlin (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(54) **VERFAHREN UND SYSTEM ZUR MESSUNG DER GESCHWINDIGKEIT VON FAHRZEUGEN IM STRASSENVERKEHR**

(57)     Das Verfahren (10) zur Messung der Geschwindigkeit eines Fahrzeuges (34, 36) im Straßenverkehr weist die nachfolgenden Verfahrensschritte auf:
- Erzeugung (11) mehrerer Bildaufnahmen (38, 40) eines Fahrzeuges (34);
- Erkennung (12) von Merkmalen (42) des Fahrzeuges (34) innerhalb der Bildaufnahmen (38, 40);
- Bestimmen (13) der Position $P_i$ der erkannten Merkmale (42);
- Prüfen (14), ob sich die erkannten Merkmale (42) innerhalb oder außerhalb eines ersten Aufnahmebereichs (B1) befinden;
- Durchführen (15) einer Grobmessung für einen Geschwindigkeitsvektor eines Fahrzeuges (34), wobei die Grobmessung auf der Position der Merkmale (42) beruht, die sich innerhalb des ersten Aufnahmebereichs (B1) befinden;
- Prüfen (16), ob der bei der Grobmessung ermittelte Geschwindigkeitsvektor eine Überschreitung einer vorgegebenen Höchstgeschwindigkeit darstellt; und
- Durchführung (17) einer Feinmessung für den Geschwindigkeitsvektor, sofern bei der vorangegangenen Prüfung eine Überschreitung der vorgegebenen Höchstgeschwindigkeit festgestellt wurde.

Fig. 3

**Beschreibung**

Die vorliegende Erfindung betrifft ein Verfahren zur Messung der Geschwindigkeit von Fahrzeugen im Straßenverkehr sowie eine entsprechende Vorrichtung für die Geschwindigkeitsmessung.

Aus dem Stand der Technik sind unterschiedliche Ansätze für die Bestimmung von Fahrzeuggeschwindigkeiten bekannt. Diese werden insbesondere dazu eingesetzt, die Verkehrssicherheit zu erhöhen und langfristig die Anzahl der Verkehrsunfälle zu reduzieren.

Die Bereitstellung von effizienten, präzisen und kostengünstigen Messverfahren bietet den Vorteil, dass diese in sämtlichen Verkehrsabschnitten eingesetzt werden können, in denen häufig Verkehrsunfälle beobachtet werden. Der Einsatz flächendeckender Verfahren für die Geschwindigkeitsmessung führt unmittelbar dazu, dass das Bewusstsein der Verkehrsteilnehmer hinsichtlich der Einhaltung der zulässigen Höchstgeschwindigkeiten geschärft wird und dass die zuständigen Behörden Verstöße gegen die Überschreitung der Höchstgeschwindigkeit leichter ahnden können.

Bislang werden sowohl aktive und passive Messverfahren zur Bestimmung der Fahrzeuggeschwindigkeit eingesetzt.

Bei den aktiven Verfahren sendet die Messvorrichtung elektromagnetische Strahlung aus, die an einem Fahrzeug reflektiert und anschließend von der Messvorrichtung erfasst wird. Durch die Auswertung der reflektierten Strahlung kann auf die Geschwindigkeit des Fahrzeuges geschlossen werden. Dabei kann beispielsweise die Signallaufzeit der von der Messvorrichtung emittierten und am Fahrzeug reflektierten Strahlung ausgewertet werden. Alternativ hierzu können Triangulationsverfahren eingesetzt werden, um die Position eines Fahrzeuges zu zwei unterschiedlichen Zeitpunkten zu berechnen und aus der Differenz der berechneten Positionen sowie der zeitlichen Differenz zwischen den einzelnen Messungen die Fahrzeuggeschwindigkeit zu bestimmen.

Ein Nachteil der aktiven Verfahren ist darin zu sehen, dass diese einen relativ hohen Energiebedarf aufweisen, wodurch ein autarker Betrieb entsprechender Messvorrichtungen erschwert wird, da die Bereitstellung der benötigten Energie durch Batterien, Akkumulatoren und/oder Solarzellen deutlich anspruchsvoller wird. Zudem sind die Messvorrichtungen für die aktive Messung der Geschwindigkeit häufig mit hohen Anschaffungskosten verbunden.

Neben den aktiven Messverfahren sind auch passive Messverfahren zur Geschwindigkeitsmessung bekannt, bei denen die Messvorrichtung keine Strahlung emittiert. Bei einigen der genannten passiven Messverfahren wird lediglich die Zeit gemessen, die ein Fahrzeug benötigt, um eine vorgegebene Wegstrecke zurückzulegen. Daher werden derartige Verfahren häufig auch als Weg-Zeit-Verfahren bezeichnet. Dabei können Lichtschranken, Helligkeitssensoren oder Drucksensoren eingesetzt werden, die beim Passieren eines Fahrzeugs ein Signal erzeugen. Ein Nachteil der vorstehend beschriebenen Weg-Zeit-Verfahren ist darin zu sehen, dass diese oft bauliche Maßnahmen erfordern, wodurch die anfänglichen Anschaffungs- und Inbetriebnahmekosten relativ hoch ausfallen können. Zudem muss bei den Weg-Zeit-Verfahren meist eine separate Kamera für die Aufnahme der Fahrzeugdaten und/oder personenspezifischer Daten eingesetzt werden. Ein weiterer Nachteil der vorstehend beschriebenen Verfahren ist darin zu sehen, dass eine nachträgliche Messwertzuordnung sowie eine nachträgliche Verifizierung der berechneten Messwerte praktisch nicht möglich sind. Dies ist insbesondere dann problematisch, wenn ein Fahrer eine vermeintlich begangene Geschwindigkeitsüberschreitung bestreitet.

Alternativ zu den Weg-Zeit-Verfahren gibt es prinzipiell noch die Möglichkeit, die Geschwindigkeit eines Fahrzeuges rein kamerabasiert zu berechnen. Dabei wird eine Kamera eingesetzt werden, die es erlaubt, einen bestimmten Streckenabschnitt zu erfassen. Die Kamera weist mindestens einen Bildsensor auf, der typischerweise als CCD-Sensor oder als CMOS-Sensor ausgebildet ist.

Durch den Einsatz spezifischer Merkmalserkennungsalgorithmen ist es möglich, ein oder mehrere markante Merkmale eines Fahrzeugs (beispielsweise einen Eckpunkt eines Kfz-Kennzeichens oder einer Windschutzscheibe) zu detektieren und die Position dieses Merkmals zum Zeitpunkt einer ersten Aufnahme zu bestimmen. Dabei ist die Kamera in der Regel derart kalibriert, dass sie eine Zuordnung zwischen den einzelnen Pixeln des Bildsensors und der Position des Merkmals innerhalb des beobachteten Streckenabschnitts erlaubt. Durch eine erneute Erfassung des Fahrzeuges durch den Bildsensor zu einem zweiten Zeitpunkt kann dasselbe Merkmal des Fahrzeugs in der zweiten Bildaufnahme erkannt und die Position dieses Merkmals zum zweiten Zeitpunkt ermittelt werden. Ist die Position eines Merkmals zum ersten Zeitpunkt und zum zweiten Zeitpunkt bekannt und ist zudem auch der zeitliche Abstand zwischen den einzelnen Aufnahmen bekannt, so kann die Geschwindigkeit für ein Merkmal bzw. für das Fahrzeug berechnet werden.

Auch ist es möglich, dass ein Kamerasystem zwei Bildsensoren aufweist, die ein Fahrzeug aus unterschiedlichen Perspektiven aufnehmen und anschließend eine dreidimensionale Positionsbestimmung für ein Merkmal ermöglichen.

Bei den vorstehend diskutierten kamerabasierten Verfahrenen liegt ein Problem darin, dass Fehler in der Merkmalserkennung das Messergebnis signifikant beeinträchtigen können. Dabei kann es insbesondere vorkommen, dass mehrere Merkmale in einer Bildaufnahme erkannt werden, die jedoch unterschiedlichen Fahrzeugen zuzuordnen sind. In diesem Fall fließen dann in unerwünschter Weise die Geschwindigkeiten mehrerer Fahrzeuge in die Messung ein, was zu einem verfälschten Ergebnis führt. Darüber hinaus besteht eine Herausforderung bei den bislang bekannten Messverfahren darin, eine effiziente Berechnung der Fahrzeuggeschwindigkeit zu ermöglichen.

Ausgehend von dem obigen Problem ist es Aufgabe der vorliegenden Erfindung, ein Verfahren zur Messung der Geschwindigkeit von Fahrzeugen im Straßenverkehr bereitzustellen, das besonders präzise, robust und effizient ist.

Zur Lösung der vorstehend genannten Aufgabe wird mit der vorliegenden Erfindung ein Verfahren zur Messung der Geschwindigkeit eines Fahrzeuges im Straßenverkehr vorgeschlagen, wobei das Verfahren unter Verwendung einer Messvorrichtung umfassend mindestens einen Bildsensor, eine Speichereinheit, eine Recheneinheit und eine Kommunikationseinheit durchgeführt wird und wobei das Verfahren die nachfolgenden Schritte aufweist:

- Erzeugung mehrerer Bildaufnahmen eines Fahrzeuges;
- Erkennung von Merkmalen des Fahrzeuges innerhalb der Bildaufnahmen;
- Bestimmen der Position der in den Bildaufnahmen erkannten Merkmale;
- Prüfen, ob sich die erkannten Merkmale innerhalb oder außerhalb eines ersten Aufnahmebereichs befinden;
- Durchführen einer Grobmessung für einen Geschwindigkeitsvektor eines Fahrzeuges, wobei die Grobmessung auf der Position der Merkmale beruht, die sich innerhalb des ersten Aufnahmebereichs befinden;
- Prüfen, ob der bei der Grobmessung ermittelte Geschwindigkeitsvektor eine Überschreitung einer vorgegebenen Höchstgeschwindigkeit darstellt; und
- Durchführung einer Feinmessung für den Geschwindigkeitsvektor, sofern bei der vorangegangenen Prüfung eine Überschreitung der vorgegebenen Höchstgeschwindigkeit festgestellt wurde.

Bei dem erfindungsgemäßen Verfahren erfolgt eine besonders präzise und effiziente Bestimmung der Fahrzeuggeschwindigkeit, wobei das Risiko von Messfehlern signifikant reduziert wird. Zudem bietet das erfindungsgemäße Verfahren den Vorteil, dass eine nachträgliche Zuordnung der einzelnen Fahrzeuge und der dazugehörigen Messung ermöglicht wird. Dadurch kann eine nachträgliche Verifizierung der ermittelten Messwerte vorgenommen werden. Wie bereits vorstehend ausgeführt, ist dies insbesondere in denjenigen Fällen von Vorteil, in denen ein Fahrer eine vermeintlich begangene Geschwindigkeitsüberschreitung bestreitet.

Das erfindungsgemäße Verfahren ermöglicht, unter optimaler Ausnutzung der vorhandenen Rechenressourcen zunächst eine grobe Messung für den Geschwindigkeitsvektor durchzuführen und nur in denjenigen Fällen, in denen eine Geschwindigkeitsüberschreitung festgestellt wurde, eine Feinmessung durchzuführen, die mit einem höheren Rechenaufwand verbunden ist. Auf diese Weise wird die präzisere Feinmessung nur dann durchgeführt, wenn diese erforderlich ist. Beträgt die vorgegebenen Höchstgeschwindigkeit auf einem Streckenabschnitt beispielsweise 100 km/h und die bei der Grobmessung ermittelte Geschwindigkeit lediglich 80 km/h, so wird auf eine Feinmessung der Geschwindigkeit verzichtet. Wird hingegen bei der Grobmessung eine Geschwindigkeit von 110 km/h ermittelt, so ist es von Vorteil, die Feinmessung durchzuführen, um ein besonders präzises Messergebnis zu erhalten und die Geschwindigkeitsüberschreitung exakt zu ermitteln.

Der im Rahmen der vorliegenden Erfindung verwendete Ausdruck Geschwindigkeitsvektor unterstreicht, dass die Geschwindigkeit eines Fahrzeuges in mehreren Dimensionen erfasst werden kann. Je nach Ausführungsform der vorliegenden Erfindung kann der Geschwindigkeitsvektor dreidimensional, zweidimensional oder eindimensional ausgeführt sein.

Die Grobmessung eines Geschwindigkeitsvektors beschreibt eine Messung, bei der relativ wenig Daten ausgewertet werden. Beispielsweise kann es für die Grobmessung ausreichen, dass lediglich zwei Bildaufnahmen verwendet und die darin enthaltenen Merkmale ausgewertet werden.

Bei der Prüfung, ob der bei der Grobmessung ermittelte Geschwindigkeitsvektor eine Überschreitung einer vorgegebenen Höchstgeschwindigkeit darstellt, wird der Betrag des Geschwindigkeitsvektors mit der vorgegebenen Höchstgeschwindigkeit verglichen. Ist der Betrag des Geschwindigkeitsvektors größer als die vorgegebene Höchstgeschwindigkeit, so stell der bei der Grobmessung ermittelte Geschwindigkeitsvektor eine Geschwindigkeitsüberschreitung dar und es wird anschließend eine Feinmessung durchgeführt.

Bei der Feinmessung hingegen werden deutlich mehr Daten ausgewertet, wodurch ein präziseres Messergebnis zu erwarten ist. Insbesondere kann vorgesehen sein, dass bei der Feinmessung sämtliche Bildaufnahmen berücksichtigt werden, die ein Fahrzeug innerhalb des ersten Aufnahmebereichs (vollständig oder zumindest teilweise) abbilden.

So können beispielsweise für die Grobmessung lediglich die Position der Merkmale in zwei Bildaufnahmen verwendet werden, während für die Feinmessung, die nur im Falle einer Geschwindigkeitsüberschreitung durchgeführt wird, die Position der Merkmale in 20 oder 30 Bildaufnahmen verwendet werden.

Nachdem mehrere (mindestens zwei) Bildaufnahmen unter Verwendung der Messvorrichtung aufgenommen wurden, erfolgt die Erkennung mehrerer Merkmale (im Englischen auch als *features* bezeichnet) des Fahrzeugs innerhalb der einzelnen Bildaufnahmen. Hierzu kann auf eines von mehreren aus dem Stand der Technik bekannten Verfahren zurückgegriffen werden. Insbesondere kann dabei auf das SIFT- (Scale Invariant Feature Transform), das SURF-(Speed Up Robust Feature), das BRIEF- (Binary Robust Independent Elementary Feature), FAST- (Features from accelerated segment test) oder das ORB-(Oriented FAST and Rotated BRIEF) Verfahren zurückgegriffen werden. Zudem kann für die Merkmalserkennung ein Harris Corner Detector eingesetzt werden, um markante Eckpunkte innerhalb einer Bildaufnahme zu erkennen.

Ein Merkmal wird typischerweise durch einen Merkmalsvektor beschrieben. Wird ein Merkmal innerhalb der ersten Bildaufnahme erkannt und ein Merkmal in der zweiten Bildaufnahme, so können die beiden Merkmalsvektoren miteinander verglichen werden, um zu überprüfen, ob diese beiden Merkmale identisch sind. Sofern die beiden in den unterschiedlichen Bildaufnahmen erkannten Merkmale denselben Merkmalsvektor aufweisen, kann davon ausgegangen werden, dass es sich hierbei um dasselbe Merkmal handelt. Alternativ kann der Abstand zwischen zwei Merkmalsvektoren berechnet werden, sodass die Identität zweier Merkmale dann angenommen werden kann, wenn der Abstand zwischen den beiden Merkmalsvektoren geringer ist als ein vorgegebener Schwellwert. Für die Berechnung des Abstandes zwischen zwei Merkmalsvektoren kann beispielsweise der Hamming-Abstand oder der euklidische Abstand zwischen den beiden Merkmalsvektoren berechnet werden.

Der Bildsensor kann insbesondere als CCD-Sensor oder als CMOS-Sensor ausgebildet sein. Die Speichereinheiten der Messvorrichtung sowie der Servereinheit können insbesondere als nichtflüchtiger Datenspeicher ausgeführt sein, wobei insbesondere eine magnetische Festplatte (auch als Hard Disk Drive oder HDD bezeichnet) oder ein Festkörperspeicher (auch als Solid State Drive oder SDD) zum Einsatz kommen kann. Die Recheneinheiten können beispielsweise als eine CPU (Central Processing Unit) oder als eine GPU (Graphics Processing Unit) implementiert sein. Die Kommunikationseinheiten können kabelgebundene oder drahtlose Kommunikationsmodule aufweisen. Insbesondere können die Kommunikationseinheiten ein GSM-, ein UMTS-, ein LTE- oder ein 5G-Kommunikationsmodul für die drahtlose Kommunikation aufweisen.

Bei dem erfindungsgemäßen Verfahren wird ein erster Aufnahmebereich definiert und es wird geprüft, ob sich sämtliche der in einer Bildaufnahme erkannten Merkmale in dem definierten ersten Aufnahmebereich befinden. Befinden sich einige Merkmale außerhalb des ersten Aufnahmebereiches, so werden diese verworfen und bleiben bei der Geschwindigkeitsmessung bzw. der Geschwindigkeitsberechnung unberücksichtigt. Dadurch wird das Risiko reduziert, dass Merkmale bei der Geschwindigkeitsmessung berücksichtigt werden, die unterschiedlichen Fahrzeugen zuzuordnen sind. Folglich werden die Messungenauigkeiten des Verfahrens reduziert und die Robustheit des Verfahrens gegenüber Messfehler erhöht.

Der erste Aufnahmebereich kann auf unterschiedliche Arten definiert werden. Insbesondere kann der erste Aufnahmebereich zur zwei Zahlenwerte definiert werden, welche die Grenzen des ersten Aufnahmebereichs definieren. Beispielsweise können die Werte $z1$ und $z2$ die Grenzen des ersten Aufnahmebereichs definieren, wobei die Werte $z1$ und $z2$ die Abstände zu einem Referenzpunkt entlang einer ersten Achse (z-Achse) definieren. Die erste Ache kann dabei parallel zu der Längsrichtung des durch eine Kamera erfassten Streckenabschnitts verlaufen, oder aber auch parallel zu einem Vektor, der orthogonal zu der Sensorfläche des Bildsensors der Kamera verläuft, wobei in letzterem Fall der Bezugspunkt auf der Sensorfläche angeordnet sein kann. Beispielsweise können $z1$ und $z2$ wie folgt definiert sein: $(z1, z2) = \{(25\ m, 35\ m), (20\ m, 30\ m), (15\ m, 25\ m)\}$.

Nachdem sämtliche Merkmale verworfen wurden, die außerhalb des ersten Aufnahmebereiches liegen, wird für jedes der nicht verworfenen Merkmale ein Geschwindigkeitsvektor bestimmt. Dabei wird die Position des jeweiligen Merkmals innerhalb der zum ersten Zeitpunkt aufgenommenen ersten Bildaufnahme und innerhalb der zum zweiten Zeitpunkt aufgenommenen zweiten Bildaufnahme bestimmt sowie die zeitliche Differenz zwischen den beiden Bildaufnahmen. Zudem wird aus den einzelnen Geschwindigkeitsvektoren ein mittlerer Geschwindigkeitsvektor ermittelt. Hierzu kann beispielsweise auf den arithmetischen Mittelwert oder auf den Medianwert zurückgegriffen werden.

Gemäß einer bevorzugten Ausführungsform des erfindungsgemäßen Verfahrens kann vorgesehen sein, dass die Durchführung der Feinmessung für den Geschwindigkeitsvektor die nachfolgenden Schritte aufweist:

- Speichern derjenigen Bildaufnahmen F, die Merkmale innerhalb des ersten Aufnahmebereiches aufweisen, wobei insgesamt N Bildaufnahmen gespeichert werden;
- Annahme eines konstanten Geschwindigkeitsvektors v des Fahrzeuges in dem ersten Aufnahmebereich;
- für alle Bildaufnahmen $F_i$ mit $i = 2,..,N$:

   (a) Berechnen einer Position $\hat{P}_{i,j}$ für jedes der in der Bildaufnahme $F_i$ erkannten Merkmale j, aus der zuvor bestimmten Position des Merkmals in der vorherigen Bildaufnahme $F_{i-1}$ und dem angenommenen Geschwindigkeitsvektor v, gemäß:

$$\hat{P}_{i,j} = P_{i-1,j} + v \cdot \Delta t,$$

   wobei $\hat{P}_{i,j}$ die bei der Feinmessung ermittelte Position des in der Bildaufnahme $F_i$ erkannten Merkmals j, $P_{i-1,j}$ die bei der Grobmessung ermittelte Position des in der Bildaufnahme $F_{i-1}$ erkannten Merkmals j, v den angenommenen Geschwindigkeitsvektor des Fahrzeuges im ersten Aufnahmebereich und $\Delta t$ die Zeitdifferenz zwi-

schen den einzelnen Bildaufnahmen beschreibt;

(b) Berechnen eines mittleren Abstandswerts zwischen den bei der Grobmessung ermittelten Positionen $P_{i,j}$ der einzelnen Merkmale j sowie den bei der Feinmessung ermittelten Positionen $\hat{P}_{i,j}$ der einzelnen Merkmale j;

(c) Änderung des Geschwindigkeitsvektors v und Wiederholung der Schritte (a) und (b), bis ein vordefiniertes Abbruchkriterium erreicht ist.

Bei dieser Ausführungsform der vorliegenden Erfindung erfolgt die Berechnung der Geschwindigkeitsmessung auf einer im Vergleich zur Grobmessung umfangreicheren Datenmenge. Durch den iterativen Ansatz wird eine präzise Berechnung des Geschwindigkeitsvektors ermöglicht. Dabei werden die Schritte (a) und (b) so oft wiederholt, bis eine vorgegebene Güte erreicht ist. Wie im Nachfolgenden noch erläutert wird, können im Rahmen der vorliegenden Erfindung unterschiedliche Abbruchkriterien definiert werden.

Wie bereits vorstehend ausgeführt, kann der Geschwindigkeitsvektor v dreidimensional, zweidimensional oder eindimensional ausgebildet sein. Beispielsweise kann ein Geschwindigkeitsvektor v angenommen werden, der bei der Grobmessung ermittelt wurde. Wenn bei der Grobmessung eine Geschwindigkeit von 105 km/h ermittelt wurde und die zulässige Höchstgeschwindigkeit 100 km/h beträgt, so kann die Feinmessung mit einer als konstant angenommenen Geschwindigkeit von 105 km/h erfolgen. Diese Geschwindigkeit kann in einem vordefinierten Bereich (beispielsweise 105 km/h +/- 5 km/h) geändert werden. Die Änderung kann bei beispielsweise in Schritten von 1 km/h erfolgen. Je nach definiertem Abbruchkriterium können die Iterationen so lange fortgesetzt werden, bis entweder alle vorab vorgegeben Geschwindigkeitswerte durchlaufen sind oder bis zuvor eine vordefinierte Abbruchbedingung eintritt.

Die Zeitdifferenz $\Delta t$ kann insbesondere aus der Bildwiederholfrequenz des eingesetzten Kamerasystems berechnet werden. Ist das Kamerasystem beispielsweise dazu eingerichtet, 25 Bilder pro Sekunde aufzunehmen, so beträgt die Zeitdifferenz $\Delta t$ zwischen zwei aufeinanderfolgenden Bildaufnahmen 40 ms.

Bei der Änderung des Geschwindigkeitsvektors v kann insbesondere die bei der Grobmessung ermittelte Position $P_{i-1,j}$ der entsprechenden Merkmale durch die bei der Feinmessung ermittelte Position $\hat{P}_{i,j}$ der Merkmale ersetzt werden, sofern der berechnete mittlere Abstandswert geringer ist als der mittlere Abstandswert, der auf Grundlage der bei der Grobmessung ermittelten Position berechnet wurde.

Gemäß einer Ausführungsform des erfindungsgemäßen Verfahrens kann vorgesehen sein, dass das Abbruchkriterium derart definiert ist, dass der mittlere Abstandswert nach einer Änderung des Geschwindigkeitsvektors nicht verringert wird. Sobald erkannt wird, dass eine Änderung des Geschwindigkeitsvektors zu keiner zusätzlichen Verbesserung der Messung führt, kann das iterative Verfahren abgeschlossen werden und derjenige Geschwindigkeitsvektor als Ergebnis der Feinmessung ausgegeben werden, bei dem der geringste Abstandswert ermittelt wurde. Weitere Iterationen können in diesem Fall als nicht erforderlich angesehen werden, sodass diese zur Vermeidung einer erhöhten Rechenkomplexität (d. h. der benötigten Rechenzeit bzw. des Rechenaufwandes) vermieden werden. Bei der Implementierung dieser Ausführungsform können ferner verschiedene gradientenbasierte Optimierungsverfahren, wie etwa das sogenannte "gradient descent"-Verfahren oder das ADAM- Verfahren zum Einsatz kommen.

Gemäß einer weiteren vorteilhaften Ausführungsform des erfindungsgemäßen Verfahrens kann vorgesehen sein, dass das Abbruchkriterium derart definiert ist, dass die Änderung des mittleren Abstandswertes nach einer Änderung des Geschwindigkeitsvektors geringer ist als ein vorgegebener Grenzwert. Der zuvor berechnete mittlere Abstandswert wird dabei als ein Indikator für die Genauigkeit der ermittelten Geschwindigkeit angesehen. Sobald der Abstandswert von einer Iteration zur nächsten Iteration keine signifikante Änderung mehr zeigt, kann zu diesem Zeitpunkt der iterative Prozess abgebrochen werden. Auf diese Weise kann eine effiziente Bestimmung der Fahrzeuggeschwindigkeit gewährleistet werden, ohne dass zusätzliche Iterationen durchgeführt werden müssen, die ohnehin voraussichtlich zu keiner signifikanten Erhöhung der Messgenauigkeit führen würden.

Ferner kann im Rahmen des erfindungsgemäßen Verfahrens vorgesehen sein, dass das Abbruchkriterium derart definiert ist, dass zuvor die Schritte (a) und (b) für eine vorgegebene Menge an Geschwindigkeitsvektoren durchgeführt wurden. Auf diese Weise wird sichergestellt, dass sämtliche Geschwindigkeitswerte innerhalb eines vorgegebenen Geschwindigkeitsbereiches iterativ geprüft werden, bevor ein finales Messergebnis ermittelt und ausgegeben wird. Prinzipiell kann es sein, dass nach einigen wenigen Iterationen aufgrund der Messdaten der Eindruck entstehen könnte, dass das optimale Ergebnis bereits nach den wenigen Iterationen erzielt wurde, da beispielsweise nach einigen Iterationen der Abstandswert keine signifikante Änderung zeigt. Es ist jedoch durchaus möglich, dass das optimale Ergebnis der Messung erst bei einem der folgenden Iterationen ermittelt wird.

Dadurch erlaubt das Durchlaufen sämtlicher Geschwindigkeitsvektoren aus einem zuvor definierten Bereich besonders zuverlässige Messergebnisse. Beispielsweise kann bei der Grobmessung eine Geschwindigkeit von 130 km/h ermittelt worden sein, während bei der Feinmessung mehrere äquidistante Geschwindigkeitswerte im Bereich von 120 km/h bis 140 km/h geprüft werden, um ein besonders präzises Messergebnis zu erreichen. Dabei können die Geschwindigkeitswerte im vorgegebenen Bereich beispielsweise in Schritten von 0,1 km/h, 0,2 km/h, 0,5 km/h oder 1 km/h durchlaufen werden, wobei für jeden Geschwindigkeitswert ein mittlerer Abstandswert berechnet wird.

Bei der Berechnung des mittleren Abstandswerts kann auf unterschiedliche Abstandswerte zurückgegriffen werden. Bevorzugt kann vorgesehen sein, dass der mittlere Abstandswert aus einem euklidischen Abstand zwischen der bei der Grobmessung ermittelten Position $P_{i,j}$ und der bei der Feinmessung bestimmten Position $\hat{P}_{i,j}$ berechnet wird. Die bei der Grobmessung ermittelte Position $P_{i,j}$ beschreibt dabei die initial ermittelte Position. Diese kann in Laufe des iterativen Verfahrens durch die bei der Feinmessung ermittelte Position $\hat{P}_{i,j}$ ersetzt werden, sofern dies zu einer Reduzierung des mittleren Abstandswertes führt. Der Abstandswert kann in diesem Fall wie folgt berechnet werden:

$$d_{euklid,i,j} = \sqrt{(\hat{P}_{i,j}^x - P_{i,j}^x)^2 + \hat{P}_{i,j}^y - P_{i,j}^y)^2 + (\hat{P}_{i,j}^z - P_{i,j}^z)^2},$$

wobei $\hat{P}_{i,j}^x$, $\hat{P}_{i,j}^y$ und $\hat{P}_{i,j}^z$ die x-, y- und z-Komponente von $\hat{P}_{i,j}$ bezeichnen und $P_{i,j}^x$, $P_{i,j}^y$ und $P_{i,j}^z$ die x-, y- und z-Komponente von $P_{i,j}$ bezeichnen.

Zur Ermittlung des mittleren Abstandswertes kann anschließend die Summe über die einzelnen Abstandswerte $d_{euklid,i,j}$ über die einzelnen Bildaufnahmen und alle Merkmale berechnet werden:

$$S = \sum_{i,j} d_{euklid,i,j}$$

Im Anschluss an die Berechnung von S kann der angenommene Geschwindigkeitsvektor v iterativ verändert werden, wobei nach jeder Veränderung eine erneute Berechnung von S erfolgt. Die iterative Änderung des Geschwindigkeitsvektors v sowie die Berechnung von S werden so lange wiederholt, bis ein vorgegebenes Abbruchkriterium erreicht ist. Im Rahmen der vorliegenden Erfindung können unterschiedliche Abbruchkriterien zum Einsatz kommen, wie bereits vorstehend erläutert wurde.

Gemäß einer weiteren Ausführungsform des erfindungsgemäßen Verfahrens kann vorgesehen sein, dass der mittlere Abstandswert aus einem Reprojektionsfehler (im Englischen auch als reprojection error) ermittelt wird. Der Reprojektionsfehler kann dabei alternativ zur Berechnung der euklidischen Distanz gemäß den obigen Ausführungen berechnet werden. Dabei kann der Reprojektionsfehler RF pro Merkmal wie folgt berechnet werden:

$$rf_{i,j} = C^{-1} \cdot \hat{P}_{i,j} - W$$

Dabei bezeichnet C die sogenannte Kalibrationsmatrix, die eine Umrechnung von echten 3D-Koordinaten zu 2D-Pixel-Koordinaten ermöglicht. Der Reprojektionsfehler gibt an, wie weit entfernt die aus $\hat{P}_{i,j}$ berechneten Pixelwerte $\hat{W} = C^{-1} \cdot \hat{P}_{i,j}$ von den ursprünglich erfassten Pixelwerten des relevanten Merkmals W = (u, v) entfernt sind.

Anschließend wird der gesamte Reprojektionsfehler als Summe aller zuvor berechneten Reprojektionsfehler berechnet:

$$RF = \sum_{i,j} rf_{i,j}$$

Und anschließend minimiert, wobei v und C als Variationsparameter dienen. Dies hat den zusätzlichen Vorteil, dass hierbei auch eine ungenaue Kalkulation weiter verbessert werden kann. Weiterhin kann aus der Kovarianz der Berechnung auf die Geschwindigkeitsberechnung geschlossen werden.

Darüber hinaus können als weitere Alternative zur Variation von v (und C) zusätzlich auch die 3D-Koordinaten eines jeden relevanten Merkmals variiert werden, um eine noch präzisere Geschwindigkeitsbestimmung zu erreichen. Hierbei können zusätzliche Randbedingungen an die 3D-Koordinaten festgesetzt werden. Beispielsweise kann ein Variationsspielraum der x,y-Koordinaten eingeschränkt werden, da der Fehler in z-Richtung als wesentlich höher angesehen werden kann.

Ferner kann gefordert werden, dass wenn die 3D-Koordinaten eines relevanten Merkmals in einer Bildaufnahme erfolgt, dieselbe Verschiebung auch in anderen Bildaufnahmen erfolgen muss, da die relativen Positionen der 3D-Koordinaten sich nicht verändern können, da diese zu einem starren Objekt (einem Fahrzeug) gehören.

Ferner kann bei dem erfindungsgemäßen Verfahren vorgesehen sein, dass die zusätzliche Variierung der 3D-Koordinaten in Abhängigkeit von den Ergebnissen der Berechnung des Reprojektionsfehlers durchgeführt wird. Beispielsweise kann die zusätzliche Variierung der 3D-Koordinaten dann erfolgen, wenn der Reprojektionsfehler oder die Kovarianz größer als ein zuvor definierter Grenzwert ist.

Darüber hinaus können die vorstehend beschriebenen Schritte des erfindungsgemäßen Verfahrens unter Variation von Algorithmusparametern wiederholt werden. Dabei kann die zuvor definierte Kovarianz als Abbruchkriterium dienen. Alternativ hierzu kann auch die Differenz in der zuvor beschriebenen Geschwindigkeitsbestimmung als Abbruchkriterium dienen.

Des Weiteren wird zur Lösung der vorstehend genannten Aufgabe eine Vorrichtung zur Messung der Geschwindigkeit von Fahrzeugen im Straßenverkehr vorgeschlagen, wobei die Vorrichtung Folgendes aufweist:

- einen Bildsensor zur Erzeugung von Bildaufnahmen;
- eine Speichereinheit zum Speichern der erzeugten Bildaufnahmen;
- eine Recheneinheit zur Durchführung mehrerer Verarbeitungsschritte; und
- eine Kommunikationseinheit zur Übermittlung von Messdaten oder Messergebnissen an eine externe Servereinheit, wobei
- die Recheneinheit dazu ausgelegt ist,

  - mehrere Bildaufnahmen eines Fahrzeugs zu erzeugen;
  - Merkmale des Fahrzeuges innerhalb der Bildaufnahme zu erkennen;
  - die Position der erkannten Merkmale zu bestimmen;
  - zu prüfen, ob sich die erkannten Merkmale innerhalb oder außerhalb eines ersten Aufnahmebereich befinden;
  - eine Grobmessung für einen Geschwindigkeitsvektor eines Fahrzeuges durchzuführen, wobei die Grobmessung auf der Position der Merkmale beruht, die sich im ersten Aufnahmebereich befinden;
  - zu prüfen, ob der bei der Grobmessung ermittelte Geschwindigkeitsvektor eine Überschreitung einer vorgegebenen Höchstgeschwindigkeit darstellt; und
  - eine Feinmessung für den Geschwindigkeitsvektor durchzuführen, sofern bei der vorangegangenen Prüfung eine Überschreitung der vorgegebenen Höchstgeschwindigkeit festgestellt wurde.

Bevorzugt kann bei der erfindungsgemäßen Vorrichtung vorgesehen sein, dass die Recheneinheit bei der Feinmessung für den Geschwindigkeitsvektor dazu ausgelegt ist,

- diejenigen Bildaufnahmen F zu speichern, die Merkmale im ersten Aufnahmebereich aufweisen;
- Annahme eines konstanten Geschwindigkeitsvektors v des Fahrzeuges in dem ersten Aufnahmebereich;
- für alle Bildaufnahmen $F_i$ mit i = 2,..,N:

  (a) eine Position $\hat{P}_{i,j}$ für jedes der in der Bildaufnahme $F_i$ erkannten Merkmale j aus der zuvor bestimmten Position des Merkmals j in der vorherigen Bildaufnahme $F_{i-1}$ und dem angenommenen Geschwindigkeitsvektors v zu berechnen gemäß:

$$\hat{P}_{i,j} = P_{i-1,j} + v \cdot \Delta t,$$

  wobei $\hat{P}_{i,j}$ die bei der Feinmessung ermittelte Position des in der Bildaufnahme $F_i$ erkannten Merkmals j, $P_{i-1,j}$ die bei der Grobmessung ermittelte Position des in der Bildaufnahme Fi-1 erkannten Merkmals j, v den angenommenen Geschwindigkeitsvektor des Fahrzeuges im ersten Aufnahmebereich und $\Delta t$ die Zeitdifferenz zwischen den einzelnen Bildaufnahmen beschreibt;
  (b) einen mittleren Abstandswert zu berechnen zwischen den bei der Grobmessung ermittelten Positionen $P_{i,j}$ der einzelnen Merkmale j sowie den bei der Feinmessung ermittelten Positionen $\hat{P}_{i,j}$ der einzelnen Merkmale j;
  (c) den Geschwindigkeitsvektor v zu verändern und die Schritte (a) und (b) so lange zu wiederholen, bis ein vordefiniertes Abbruchkriterium erreicht ist.

Zudem kann bei der erfindungsgemäßen Vorrichtung vorgesehen sein, dass das Abbruchkriterium derart definiert ist, dass der mittlere Abstandswert nach einer Änderung des Geschwindigkeitsvektors nicht verringert wird.

Ferner kann vorgesehen sein, dass das Abbruchkriterium derart definiert ist, dass die Änderung des mittleren Abstandswertes nach einer Änderung des Geschwindigkeitsvektors geringer ist als ein vorgegebener Grenzwert.

Auch kann gemäß einer bevorzugten Ausführungsform der erfindungsgemäßen Vorrichtung vorgesehen sein, dass das Abbruchkriterium derart definiert ist, dass die Recheneinheit zuvor die Schritte (a) und (b) für eine vorgegebene Menge an Geschwindigkeitsvektoren durchgeführt hat.

Darüber hinaus kann vorgesehen sein, dass der mittlere Abstandswert aus einem euklidische Abstand zwischen der bei der Grobmessung ermittelten Position $P_{i,j}$ und der bei der Feinmessung ermittelten Position $\hat{P}_{i,j}$ berechnet wird.

Schließlich kann bei der erfindungsgemäßen Vorrichtung vorgesehen sein, dass der mittlere Abstandswert aus einem Reprojektionsfehler ermittelt wird.

Ferner kann gemäß dem erfindungsgemäßen Verfahren vorgesehen sein, dass der erste Aufnahmebereich durch zwei Punkte definiert ist, die entlang einer ersten Achse verlaufen, wobei der erste Aufnahmebereich durch zwei parallelen Ebenen begrenzt ist, die orthogonal zu der ersten Achse sowie durch die zwei Punkte verlaufen, und wobei die erste Achse insbesondere parallel zu der Bildsensornormalen oder zur Längsachse eines Fahrabschnittes verläuft. Dadurch kann der erste Aufnahmebereich in besonders effizienter Weise definiert werden, wodurch der Rechenaufwand des gesamten Verfahrens reduziert wird.

Nachfolgend wird die folgende Erfindung der Figuren näher beschrieben, wobei die Figuren Folgendes zeigen:

Fig. 1    ein Ausführungsbeispiel des erfindungsgemäßen Verfahrens,

Fig. 2    ein Ausführungsbeispiel der erfindungsgemäßen Vorrichtung,

Fig. 3    eine schematische Darstellung der Geschwindigkeitsmessung im Straßenverkehr,

Fig. 4    eine erste und eine zweite Bildaufnahme, die zu unterschiedlichen Zeiten aufgenommen wurden,

Fig. 5    verschiedene mittlere Abstandswerte, die für unterschiedliche Geschwindigkeitsvektoren berechnet wurden.

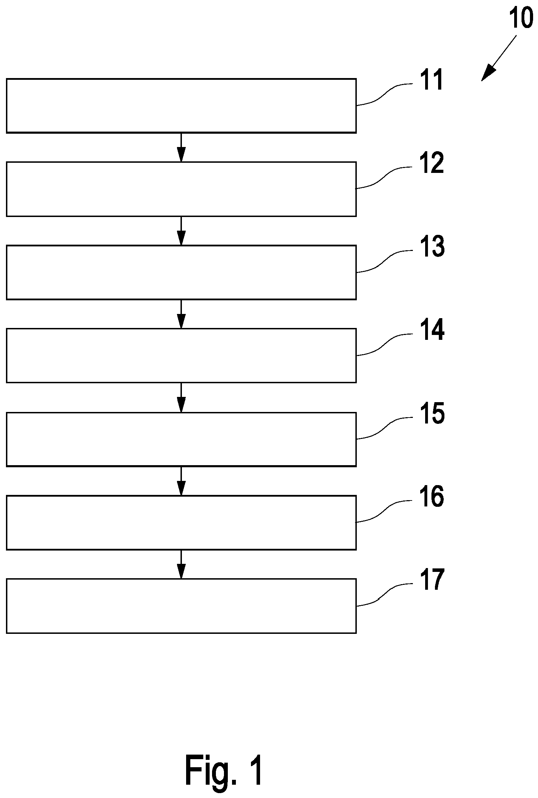

In der Fig. 1 ist ein Ausführungsbeispiel des erfindungsgemäßen Verfahrens 10 dargestellt. Bei dem erfindungsgemäßen Verfahren werden insgesamt sieben Verfahrensschritte 11-17 durchgeführt. In dem ersten Verfahrensschritt 11 werden mehrere Bildaufnahmen des Fahrzeugs unter Verwendung eines Bildsensors erzeugt. In den einzelnen Bildaufnahmen werden im zweiten Verfahrensschritt 12 charakteristische Merkmale (auch als *features* bezeichnet) erkannt. Hierzu kann eins der vorstehend genannten Verfahren, insbesondere das SIFT-Verfahren oder ein Harris Corner Detector, verwendet werden. Im dritten Verfahrensschritt 13 wird die Position der erkannten Merkmale bestimmt, bevor im vierten Verfahrensschritt 14 geprüft wird, ob sich die erkannten Merkmale innerhalb oder außerhalb eines ersten Aufnahmebereichs befinden. Dabei können diejenigen Merkmale verworfen werden, die sich außerhalb des ersten Aufnahmebereichs befinden. Anschließend wird im fünften Verfahrensschritt 15 eine Grobmessung für einen Geschwindigkeitsvektor eines Fahrzeuges durchgeführt. Die Grobmessung beruht dabei auf der Position der Merkmale, die sich innerhalb des ersten Aufnahmebereichs befinden. Beispielsweise können bei der Grobmessung lediglich zwei Bildaufnahmen verwendet werden, die ein Fahrzeug innerhalb des ersten Aufnahmebereich zeigen. Grundsätzlich kann es dabei ausreichen, während der Grobmessung die Position eines Merkmals innerhalb der ersten Bildaufnahme und der zweiten Bildaufnahme zu bestimmen. Aus der Differenz der beiden Positionen sowie der Zeit, die zwischen den beiden Bildaufnahmen liegt, kann im Rahmen der Grobmessung die Geschwindigkeit des Fahrzeugs bestimmt werden. Die Rechenanforderungen für die Grobmessung sind relativ gering. Alternativ können aber auch mehrere Merkmale in zwei Bildaufnahmen ausgewertet werden, wobei die Geschwindigkeit des Fahrzeugs im Rahmen der Grobmessung aus einem Mittelwert der Einzelgeschwindigkeiten berechnet werden kann, die für jedes einzelne Merkmal ermittelt wurde. Bei der Mittelung der Einzelgeschwindigkeiten kann beispielsweise eine arithmetische Mittelung vorgenommen oder aber ein Medianwert ermittelt werden. Im sechsten Verfahrensschritt 16 wird geprüft, ob der im Rahmen der Grobmessung ermittelte Geschwindigkeitsvektor eine Überschreitung einer vorgegebenen Höchstgeschwindigkeit darstellt. Durch diese Prüfung kann festgestellt werden, ob eine erneute und im Vergleich zur Grobmessung präzisere Geschwindigkeitsberechnung erforderlich ist. In denjenigen Fällen, in denen bei der Grobmessung ermittelt wurde, dass die Geschwindigkeit des Fahrzeugs geringer ist als die vorgegebene Höchstgeschwindigkeit in einem bestimmten Streckenabschnitt, reicht das Ergebnis der Grobmessung aus. In diesem Fall ist eine Durchführung einer Feinmessung nicht erforderlich, da der genaue Geschwindigkeitswert nicht relevant ist. Falls jedoch eine Höchstgeschwindigkeit überschritten wurde, ist die Durchführung einer Feinmessung erforderlich, da der genaue Geschwindigkeitswert insbesondere für die Feststellung der rechtlichen Konsequenzen (Bußgeld oder ggf. Entzug der Fahrerlaubnis) von Interesse ist. Daher wird im siebten Verfahrensschritt 17 eine Feinmessung für den Geschwindigkeitsvektor durchgeführt, sofern bei der vorangegangenen Prüfung eine Überschreitung der vorgegebenen Höchstgeschwindigkeit festgestellt wurde. Das erfindungsgemäße Verfahren erlaubt einerseits eine effiziente Berechnung der Fahrzeuggeschwindigkeit, die in Echtzeit erfolgen kann, und andererseits eine besonders präzise Berechnung der Fahrzeuggeschwindigkeit in besonderen Umständen (Überschreitung der zulässigen Höchstgeschwindigkeit). Auf diese Weise werden die verfügbaren Rechenkapazitäten in einer besonders effizienten Weise genutzt. Zudem kann durch die effiziente Berechnung der Stromverbrauch signifikant reduziert werden. Folglich können batteriebetriebene Messvorrichtungen bereitgestellt werden, die eine deutlich längere Batterielaufzeit bieten. Darüber hinaus kann das thermische Design der Messvorrichtungen vereinfacht werden, da insgesamt weniger Wärme abgeführt werden muss. Schließlich erlaubt die recheneffiziente Implementierung des erfindungsgemäßen Verfahrens, eine einfache und kostengünstige Recheneinheit zu verwenden, wodurch die Gesamtkosten der Messvorrichtung reduziert werden können.

Auch wenn die Verfahrensschritte vorstehend in einer konkreten Reihenfolge beschrieben sind, ist es für den Fachmann jedoch erkenntlich, dass diese Reihenfolge als rein beispielhaft zu verstehen ist und dass einzelne Verfahrensschritte auch in einer anderen Reihenfolge durchgeführt werden können.

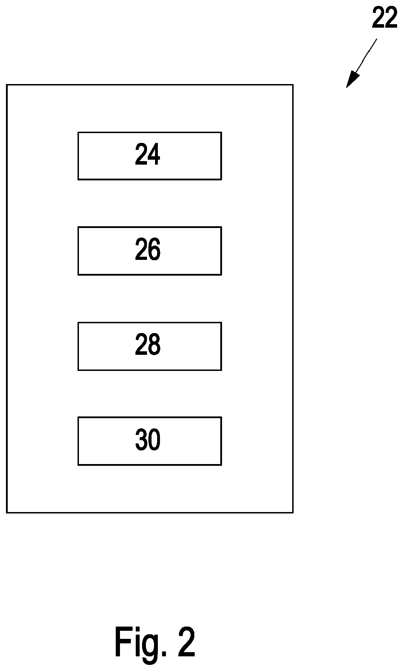

In der Fig. 2 ist ein Ausführungsbeispiel der erfindungsgemäßen Vorrichtung 22 gezeigt. Die Vorrichtung 22 weist einen Bildsensor 24, eine Speichereinheit 26, eine Recheneinheit 28 und eine Kommunikationseinheit 30 auf. Der Bildsensor 24 kann insbesondere als ein CCD-Sensor oder ein CMOS-Sensor ausgebildet sein. Zusätzlich kann auch ein zweiter Bildsensor vorgesehen sein, der in der Fig. 2 nicht abgebildet ist. Die Speichereinheit 26 kann insbesondere als nichtflüchtiger Datenspeicher ausgebildet sein. Bei der Recheneinheit 28 kann beispielsweise eine CPU (Central Processing Unit) oder eine GPU (Graphics Processing Unit) zum Einsatz kommen. Die Kommunikationseinheit 30 kann insbesondere ein drahtloses Kommunikationsmodul aufweisen, wobei insbesondere ein GSM-, ein UMTS-, ein LTE- oder ein 5G-Kommunikationsmodul vorgesehen sein kann. Die Kommunikationseinheit ist dazu konfiguriert, mit einer zentralen Einheit zu kommunizieren und die aufgenommenen Messdaten bzw. Messwerte bei Bedarf zu übermitteln. Dabei können einerseits die Messergebnisse (also die ermittelten Fahrzeuggeschwindigkeiten) übermittelt werden, und zwar gemeinsam mit einer Bildaufnahme, die das entsprechende Fahrzeug sowie personenbezogene Daten (insbesondere ein KFZ-Kennzeichen und/oder den Fahrzeughalter) zeigen. Andererseits können aber auch (ausschließlich oder ergänzend) die Rohdaten, die für die Geschwindigkeitsberechnung verwendet wurden, übermittelt werden, sodass das Messergebnis bei Bedarf zu einem späteren Zeitpunkt aus diesen Rohdaten rekonstruiert werden kann. Dadurch kann die Transparenz der Geschwindigkeitsmessung erhöht werden, wodurch auch eine Erhöhung der Akzeptanz des Verfahrens bei den Bürgern zu erwarten ist.

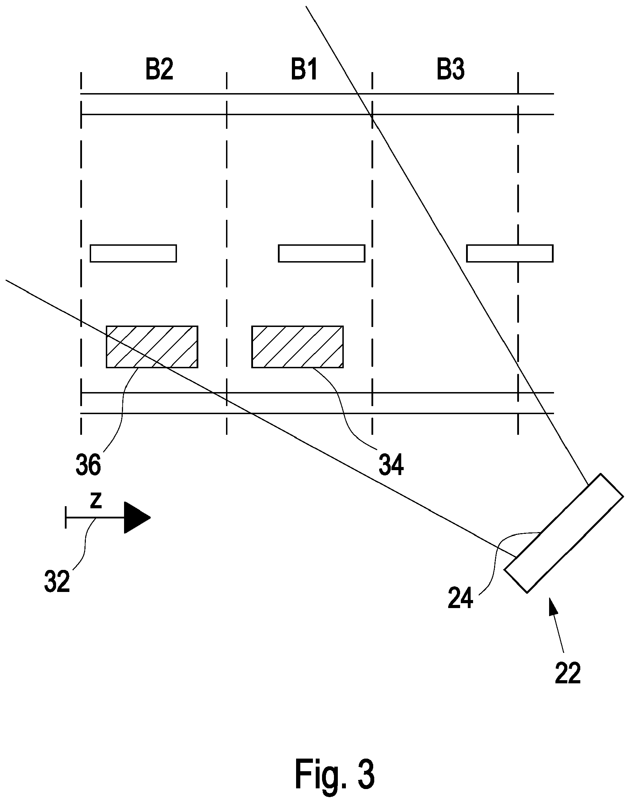

In der Fig. 3 ist eine schematische Darstellung der Geschwindigkeitsmessung im Straßenverkehr abgebildet. Wie in dieser Figur gezeigt, ist die Messvorrichtung 22 so ausgerichtet, dass der Bildsensor 24 einen Aufnahmebereich erfassen kann. Der Bildsensor kann alternativ auch derart angeordnet sein, dass eine Aufnahme aus der Vogelperspektive generiert wird. In dem in der Fig. 3 gezeigten Ausführungsbeispiel ist der gesamte Aufnahmebereich eingeteilt in einen ersten Aufnahmebereich B1, einen zweiten Aufnahmebereich B2 und einen dritten Aufnahmebereich B3. Der zweite Aufnahmebereich B2 und der dritte Aufnahmebereich B3 grenzen an den ersten Aufnahmebereich B1 an. Die Aufnahmebereiche B1, B2, B3 können insgesamt durch vier Zahlenwerte (z0, z1, z2, z3) definiert werden, die vier Punkte entlang einer ersten Achse 32 (auch als z-Achse bezeichnet) beschreiben. Die drei Aufnahmebereiche B1, B2, B3 können durch die genannten vier Zahlenwerte eindeutig beschrieben werden, wobei die Aufnahmebereiche B1, B2, B3 jeweils durch zwei parallele Ebenen begrenzt sind, die orthogonal zu der ersten Ache 32 sowie durch die definierten Punkte verlaufen. Beispielsweise kann (z0, z1, z2, z3) = (40, 35, 25, 10) sein, während die einzelnen Werte den Abstand zu einem Referenzpunkt entlang der ersten Achse (in Metern) angeben. In dem gezeigten Ausführungsbeispiel erfasst der Bildsensor 24 ein erstes Fahrzeug 34, das sich in dem ersten Aufnahmebereich B1 befindet und ein zweites Fahrzeug 36, das sich in dem zweiten Aufnahmebereich B2 befindet. Erfindungsgemäß ist vorgesehen, dass sämtliche Merkmale, die außerhalb des ersten Aufnahmebereichs B1 erkannt werden, bei der Ermittlung der Fahrzeuggeschwindigkeit vernachlässigt werden. Dies führt in vorteilhafter Weise dazu, dass für die Berechnung der Geschwindigkeit lediglich diejenigen Merkmale berücksichtigt werden, die dem ersten Fahrzeug 34 zugeordnet werden. Dadurch wird das Risiko reduziert, dass Merkmale des zweiten Fahrzeugs mit in die Geschwindigkeitsermittlung hineinfließen. Folglich werden die Präzision und die Robustheit des Messverfahrens erhöht.

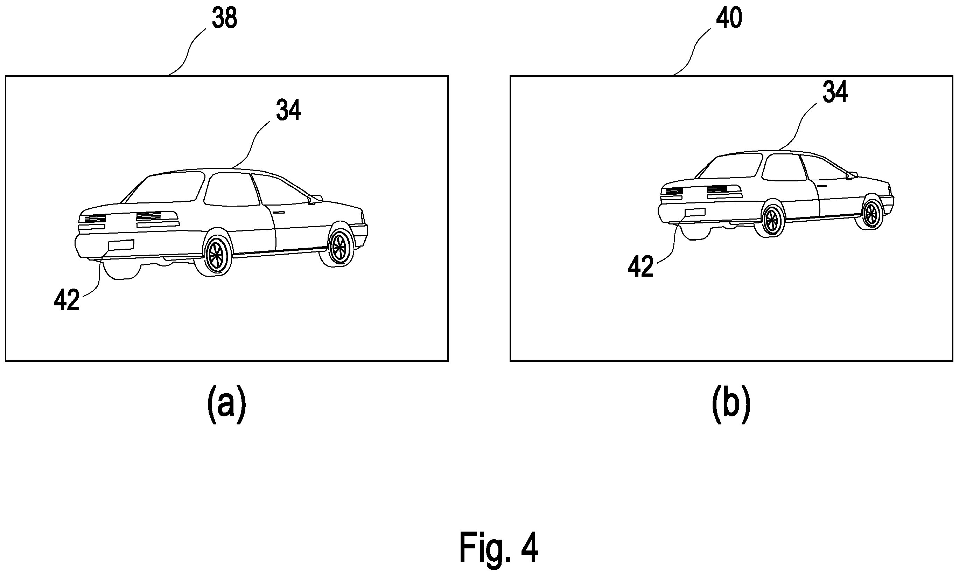

In der Fig. 4 sind zwei Bildaufnahmen 38, 40 abgebildet, die zu zwei unterschiedlichen Zeitpunkten generiert wurden. In beiden Bildaufnahmen 38, 40 ist das erste Fahrzeug 34 abgebildet. In den Bildaufnahmen ist ein Merkmal 42 erkannt, wobei es sich in dem gezeigten Ausführungsbeispiel um einen Eckpunkt eines KFZ-Kennzeichens handelt. Die Position des Merkmals 42 wird unter Verwendung eines der aus dem Stand der Technik bekannten Verfahrens ermittelt. Aus der Position des Merkmals 42 in der ersten Bildaufnahme 38 und der Position desselben Merkmals in der zweiten Bildaufnahme 40 sowie der zeitlichen Differenz zwischen den beiden Bildaufnahmen 38, 40 kann die Geschwindigkeit des Fahrzeugt bzw. die Geschwindigkeit für ein Merkmal bestimmt werden. In der Praxis wird jedoch typischerweise nicht ein einziges Merkmal erkannt und analysiert, sondern mehrere hundert Merkmale.

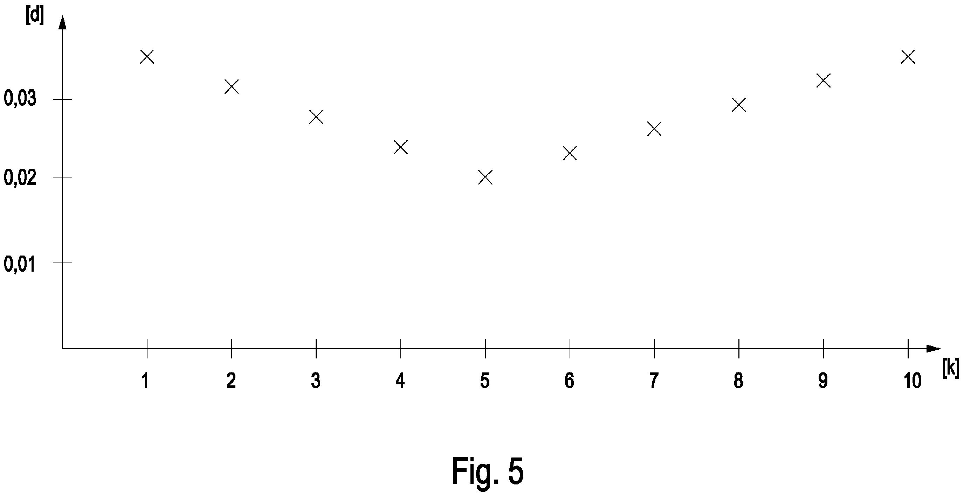

Schließlich ist in der Fig. 5 ein mittlerer Abstandswert d dargestellt, der für verschiedene Geschwindigkeitsvektoren $v_k$ berechnet wurde. In der Fig. 5 ist die Ausführungsform gezeigt, bei der die vorstehend beschriebenen iterativen Schritte für eine vorgegebene Menge an Geschwindigkeitsvektoren durchgeführt wurden. In diesem Ausführungsbeispiel sind zehn Geschwindigkeitsvektoren vorgesehen (k = 1 bis 10), für die jeweils der mittlere Abstandswert d berechnet wurde. Bei dem in der Fig. 5 dargestellten Fall ist zu erkennen, dass der fünfte Geschwindigkeitsvektor (k=5) zu dem niedrigsten mittleren Abstandswert führt. Hieraus ist zu entnehmen, dass der fünfte Geschwindigkeitsvektor das beste Ergebnis für die Geschwindigkeit des Fahrzeuges liefert. Alternativ zu dem in der Fig. 5 dargestellten Ausführungsbeispiel kann vorgesehen sein, dass das Abbruchkriterium derart definiert ist, dass der Abstandswert d nur für die ersten sechs Geschwindigkeitsvektoren berechnet wird und dass nach der Berechnung des sechsten mittleren Abstandwerts d das Abbruchkriterium erreicht ist, da sich der Abstandswert d, der für den sechsten Geschwindigkeitsvektor berechnet wurde, gegenüber dem mittleren Abstandswert, der für den fünften Geschwindigkeitsvektor berechnet wurde, nicht mehr verringert hat.

**BEZUGSZEICHENLISTE**

10   erfindungsgemäßes Verfahren
11   erster Verfahrensschritt
12   zweiter Verfahrensschritt
13   dritter Verfahrensschritt
14   vierter Verfahrensschritt
15   fünfter Verfahrensschritt
16   sechster Verfahrensschritt
17   siebter Verfahrensschritt
22   Messvorrichtung
24   Bildsensor
26   Speichereinheit
28   Recheneinheit
30   Kommunikationseinheit
32   erste Achse
34   erstes Fahrzeug
36   zweites Fahrzeug
38   erste Bildaufnahme
40   zweite Bildaufnahme
42   Merkmal
B1   erster Aufnahmebereich
B2   zweiter Aufnahmebereich
B3   dritter Aufnahmebereich

**Patentansprüche**

**1.** Verfahren (10) zur Messung der Geschwindigkeit eines Fahrzeuges (34) im Straßenverkehr, unter Verwendung einer Messvorrichtung (22) umfassend mindestens einen Bildsensor (24), eine Speichereinheit (26), eine Recheneinheit (28) und eine Kommunikationseinheit (30), wobei das Verfahren (10) die nachfolgenden Verfahrensschritte aufweist:

- Erzeugung (11) mehrerer Bildaufnahmen (38, 40) eines Fahrzeuges (34);
- Erkennung (12) von Merkmalen (42) des Fahrzeuges (34) in den Bildaufnahmen (38, 40);
- Bestimmen (13) der Position der in den Bildaufnahmen (38, 40) erkannten Merkmale (42);
- Prüfen (14), ob sich die erkannten Merkmale (42) innerhalb oder außerhalb eines ersten Aufnahmebereichs (B1) befinden;
- Durchführen (15) einer Grobmessung für einen Geschwindigkeitsvektor eines Fahrzeuges (34), wobei die Grobmessung auf der Position der Merkmale (42) beruht, die sich innerhalb des ersten Aufnahmebereichs (B1) befinden;
- Prüfen (16), ob der bei der Grobmessung ermittelte Geschwindigkeitsvektor eine Überschreitung einer vorgegebenen Höchstgeschwindigkeit darstellt; und
- Durchführen (17) einer Feinmessung für den Geschwindigkeitsvektor, sofern bei der vorangegangenen Prüfung eine Überschreitung der vorgegebenen Höchstgeschwindigkeit festgestellt wurde.

**2.** Verfahren (10) nach Anspruch 1, **dadurch gekennzeichnet, dass** das Durchführen (17) der Feinmessung für den Geschwindigkeitsvektor die nachfolgenden Schritte aufweist:

- Speichern derjenigen Bildaufnahmen F, die Merkmale (42) innerhalb des ersten Aufnahmebereiches (B1) aufweisen, wobei insgesamt N Bildaufnahmen gespeichert werden;
- Annahme eines konstanten Geschwindigkeitsvektors v des Fahrzeuges (34) in dem ersten Aufnahmebereich (B1);
- für alle Bildaufnahmen $F_i$ mit i = 2,..,N:

(a) Berechnen einer Position $\hat{P}_{i,j}$ für jedes der in der Bildaufnahme $F_i$ erkannten Merkmale j aus der zuvor bestimmten Position des Merkmals in der vorherigen Bildaufnahme $F_{i-1}$ und dem angenommenen Geschwindigkeitsvektor v gemäß:

$$\hat{P}_{i,j} = P_{i-1,j} + v \cdot \Delta t,$$

wobei $\hat{P}_{i,j}$ die bei der Feinmessung ermittelte Position des in der Bildaufnahme $F_i$ erkannten Merkmals j, $P_{i-1,j}$ die bei der Grobmessung ermittelte Position des in der Bildaufnahme $F_{i-1}$ erkannten Merkmals j, v den angenommenen Geschwindigkeitsvektor des Fahrzeuges (34) im ersten Aufnahmebereich (B1) und $\Delta t$ die Zeitdifferenz zwischen den einzelnen Bildaufnahmen beschreibt;
(b) Berechnen eines mittleren Abstandswerts zwischen den bei der Grobmessung ermittelten Positionen $P_{i,j}$ der einzelnen Merkmale j sowie den bei der Feinmessung ermittelten Positionen $\hat{P}_{i,j}$ der einzelnen Merkmale j;
(c) Änderung des Geschwindigkeitsvektors v und Wiederholung der Schritte (a) und (b), bis ein vordefiniertes Abbruchkriterium erreicht ist.

3. Verfahren (10) nach Anspruch 2, **dadurch gekennzeichnet, dass** das Abbruchkriterium derart definiert ist, dass der Abstandswert nach einer Änderung des Geschwindigkeitsvektors nicht verringert wird.

4. Verfahren (10) nach Anspruch 2, **dadurch gekennzeichnet, dass** das Abbruchkriterium derart definiert ist, dass die Änderung des Abstandswertes nach einer Änderung des Geschwindigkeitsvektors geringer ist als ein vorgegebener Grenzwert.

5. Verfahren (10) nach Anspruch 2, **dadurch gekennzeichnet, dass** das Abbruchkriterium derart definiert ist, dass zuvor die Schritte (a) und (b) für eine vorgegebene Menge an Geschwindigkeitsvektoren durchgeführt wurden.

6. Verfahren (10) nach einem der Ansprüche 2 bis 5, **dadurch gekennzeichnet, dass** der mittlere Abstandswert aus einem euklidischen Abstand zwischen der bei der Grobmessung ermittelten Position $P_{i,j}$ und der bei der Feinmessung bestimmten Position $\hat{P}_{i,j}$ berechnet wird.

7. Verfahren (10) nach einem der Ansprüche 2 bis 6, **dadurch gekennzeichnet, dass** der mittlere Abstandswert aus einem Reprojektionsfehler ermittelt wird.

8. Vorrichtung (22) zur Messung der Geschwindigkeit von Fahrzeugen (34) im Straßenverkehr, umfassend:

    - einen Bildsensor (24) zur Erzeugung von Bildaufnahmen (38, 40);
    - eine Speichereinheit (26) zum Speichern der erzeugten Bildaufnahmen (38, 40);
    - eine Recheneinheit (28) zur Durchführung mehrerer Verarbeitungsschritte; und
    - eine Kommunikationseinheit (30) zur Übermittlung von Messdaten oder Messergebnissen an eine externe Servereinheit, wobei
    - die Recheneinheit (28) dazu ausgelegt ist,

        - mehrere Bildaufnahmen (38, 40) eines Fahrzeugs zu erzeugen;
        - Merkmale (42) des Fahrzeuges (34) innerhalb der Bildaufnahmen (38, 40) zu erkennen;
        - die Position der erkannten Merkmale (42) zu bestimmen;
        - zu prüfen, ob sich die erkannten Merkmale (42) innerhalb oder außerhalb eines ersten Aufnahmebereich (B1) befinden;
        - eine Grobmessung für einen Geschwindigkeitsvektor eines Fahrzeuges (34) durchzuführen, wobei die Grobmessung auf der Position der Merkmale (42) beruht, die sich im ersten Aufnahmebereich (B1) befinden;
        - zu prüfen, ob der bei der Grobmessung ermittelte Geschwindigkeitsvektor eine Überschreitung einer vorgegebenen Höchstgeschwindigkeit darstellt; und
        - eine Feinmessung für den Geschwindigkeitsvektor durchzuführen, sofern bei der vorangegangenen Prüfung eine Überschreitung der vorgegebenen Höchstgeschwindigkeit festgestellt wurde.

9. Vorrichtung (22) nach Anspruch 8, **dadurch gekennzeichnet, dass** die Recheneinheit (28) bei der Feinmessung für den Geschwindigkeitsvektor dazu ausgelegt ist,

    - diejenigen Bildaufnahmen F zu speichern, die Merkmale innerhalb des ersten Aufnahmebereiches (B1) aufweisen;

- einen konstanten Geschwindigkeitsvektors v des Fahrzeuges in dem ersten Aufnahmebereich (B1) anzunehmen;

- für alle Bildaufnahmen $F_i$ mit i = 2,..,N:

(a) eine Position $\hat{P}_{i,j}$ für jedes der in der Bildaufnahme $F_i$ erkannten Merkmale j aus der zuvor bestimmten Position des Merkmals j in der vorherigen Bildaufnahme $F_{i-1}$ und dem angenommenen Geschwindigkeitsvektor v zu berechnen gemäß:

$$\hat{P}_{i,j} = P_{i-1,j} + v \cdot \Delta t,$$

wobei $\hat{P}_{i,j}$ die bei der Feinmessung ermittelte Position des in der Bildaufnahme $F_i$ erkannten Merkmals j, $P_{i-1,j}$ die bei der Grobmessung ermittelte Position des in der Bildaufnahme $F_{i-1}$ erkannten Merkmals j, v den angenommenen Geschwindigkeitsvektor des Fahrzeuges (34) im ersten Aufnahmebereich (B1) und $\Delta t$ die Zeitdifferenz zwischen den einzelnen Bildaufnahmen (38, 40) beschreibt;

(b) einen mittleren Abstandswert zu berechnen zwischen den bei der Grobmessung ermittelten Positionen $P_{i,j}$ der einzelnen Merkmale j sowie den bei der Feinmessung ermittelten Positionen $\hat{P}_{i,j}$ der einzelnen Merkmale j;

(c) den Geschwindigkeitsvektor v zu verändern und die Schritte (a) und (b) so lange zu wiederholen, bis ein vordefiniertes Abbruchkriterium erreicht ist.

10. Vorrichtung (22) nach Anspruch 9, **dadurch gekennzeichnet, dass** das Abbruchkriterium derart definiert ist, dass der Abstandswert nach einer Änderung des Geschwindigkeitsvektors nicht verringert wird.

11. Vorrichtung (22) nach Anspruch 9, **dadurch gekennzeichnet, dass** das Abbruchkriterium derart definiert ist, dass die Änderung des Abstandswertes nach einer Änderung des Geschwindigkeitsvektors geringer ist als ein vorgegebener Grenzwert.

12. Vorrichtung (22) nach Anspruch 9, **dadurch gekennzeichnet, dass** das Abbruchkriterium derart definiert ist, dass die Recheneinheit (28) zuvor die Schritte (a) und (b) für eine vorgegebene Menge an Geschwindigkeitsvektoren durchgeführt wurden.

13. Vorrichtung (22) nach einem der Ansprüche 8 bis 12, **dadurch gekennzeichnet, dass** der mittlere Abstandswert aus einem euklidischen Abstand zwischen der bei der Grobmessung ermittelten Position $P_{i,j}$ und der bei der Feinmessung ermittelten Position $\hat{P}_{i,j}$ berechnet wird.

14. Vorrichtung (22) nach einem der Ansprüche 8 bis 13, **dadurch gekennzeichnet, dass** der mittlere Abstandswert aus einem Reprojektionsfehler ermittelt wird.

Fig. 1

22

24

26

28

30

Fig. 2

Fig. 3

(a)

(b)

**Fig. 4**

EP 4 303 849 A1

Fig. 5

EP 4 303 849 A1

**EUROPÄISCHER RECHERCHENBERICHT**

Nummer der Anmeldung

EP 22 18 3474

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/063247 A1 (BERNAL EDGAR A [US] ET AL) 6. März 2014 (2014-03-06) * Absätze [0002], [0010], [0011], [0028], [0029], [0037], [0048], [0050], [0051]; Abbildungen 1,2,3a,3b,4a,4b,5a,5b * ----- | 1-14 | INV. G08G1/04 G06V10/62 G06V20/54 G08G1/054 G08G1/052 G06V20/62 G06T7/246 |
| | | | RECHERCHIERTE SACHGEBIETE (IPC) G08G G06K G06V G06T |

Der vorliegende Recherchenbericht wurde für alle Patentansprüche erstellt

| Recherchenort | Abschlußdatum der Recherche | Prüfer |
|---|---|---|
| Den Haag | 19. Dezember 2022 | Fagundes-Peters, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 18 3474

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-12-2022

| Im Recherchenbericht angeführtes Patentdokument | Datum der Veröffentlichung | Mitglied(er) der Patentfamilie | Datum der Veröffentlichung |
|---|---|---|---|
| US 2014063247 A1 | 06-03-2014 | BR 102013021945 A2 | 21-10-2014 |
| | | DE 102013216041 A1 | 28-05-2014 |
| | | GB 2507395 A | 30-04-2014 |
| | | US 2014063247 A1 | 06-03-2014 |

Für nähere Einzelheiten zu diesem Anhang : siehe Amtsblatt des Europäischen Patentamts, Nr.12/82